# EUROPÄISCHE PATENTSCHRIFT

(11) **EP 2 425 188 B1**
(45) Veröffentlichungstag und Bekanntmachung des Hinweises auf die Patenterteilung: **19.08.2015**
(21) Anmeldenummer: 10743005.0
(22) Anmeldetag: 30.04.2010
(51) Int. Cl.: F24J 2/52

(54) **VORRICHTUNG ZUR BEFESTIGUNG EINER TRAGSCHIENE AN EINEM DACHHAKEN**
APPARATUS FOR FASTENING A CARRIER RAIL TO A ROOF HOOK
DISPOSITIF POUR LA FIXATION D'UN RAIL PORTEUR SUR UN CROCHET DE TOITURE

(30) Priorität: 30.04.2009 DE 202009006367 U
(43) Veröffentlichungstag der Anmeldung: 07.03.2012
(73) Patentinhaber: Schletter GmbH, 83527 Kirchdorf (DE)
(72) Erfinder: SCHLETTER, Ludwig, 83527 Haag (DE); URBAN, Hans, 83527 Haag (DE)
(86) Internationale Anmeldenummer: PCT/DE2010/000488
(87) Internationale Veröffentlichungsnummer: WO 2010/124680

(56) Entgegenhaltungen:
- DE-A1- 10 124 048
- DE-A1-102008 015 089
- DE-U1-202007 008 471

## Beschreibung

Die Erfindung betrifft eine Vorrichtung zur höhenverstellbaren Befestigung einer Tragschiene an einem Dachhaken.

Dachhaken werden an Unterkonstruktionen von Schrägdächem befestigt. Bei der Montage einer Tragschiene an mehreren Dachhaken kann es erforderlich sein, Unebenheiten der Unterkonstruktion oder der Dachdeckung auszugleichen. Höhenverstellbar bedeutet in diesem Zusammenhang, dass der Abstand zur Unterkonstruktion oder Dachdeckung verstellbar ist. Derartige Anordnungen werden insbesondere für die Dachmontage von Photovoltaik-Modulen benötigt.

Aus DE 10 2004 057 041 A1 ist ein Dachmontagesystem bekannt, dessen Dachhaken einen C-förmigen Haltebügel umfasst, der an seinem freien Ende zur höhenverstellbaren Befestigung einer Tragschiene einen Verstellabschnitt aufweist. Der Verstellabschnitt ist senkrecht zur Montageplatte des Dachhakens ausgeführt und enthält ein Langloch, durch das eine Schraube führt, die in eine hinterschnittene Längsnut in der am Verstellabschnitt anliegenden Seite der Tragschiene eingeschoben ist.

Aus DE 10 2006 000 090 A1 ist eine Vorrichtung für die dachparallel verstellbare Befestigung eines Trägerprofils an einem Dachhaken bekannt. Zwischen einem Halteelement der Vorrichtung und einem Festlegeabschnitt des Dachhakens ist ein Federelement angeordnet, welches das Halteelement in einem Vormontagezustand fixiert. In dem Vormontagezustand ist das Trägerprofil in das Halteelement einsetzbar.

Aus DE 20 2007 008 471 U1 ist eine Vorrichtung zum Verbinden einer Profilschiene mit einem Dachhaken bekannt. Die Vorrichtung umfasst einen Grundkörper mit einer Auflagefläche für die Profilschiene. Die Vorrichtung ist auf der Oberseite eines dachparallelen Bügelabschnitts des Dachhakens angeordnet. Von der Auflagefläche steht ein sogenannter Hakensteg ab zum Hintergreifen einer Nut der Profilschiene. Auf einer Rampe des Grundkörpers ist ein Klemmkeil angeordnet. Die Vorrichtung weist außerdem eine Schraube auf, die der Reihe nach durch den Klemmkeil, den Grundkörper und ein Langloch im horizontalen Bügelabschnitt führt. Die Profilschiene wird mittels des Klemmkeils und der Schraube gegen den Hakensteg geklemmt. Auf der Unterseite des dachparallelen Bügelabschnitts des Dachhakens ist eine Mutter vorgesehen, die mit der Schraube im Gewindeeingriff steht. Die Mutter ist mit einem verschiebbaren Hilfsbauteil gegenüber dem Bügelabschnitt verdrehgesichert. Die Vorrichtung ist an dem Dachhaken nicht höhenverstellbar. DE 20 2007 008 471 U1 offenbart den Oberbegriff des Anspruchs 1.

Aus DE 10 2008 015 089 A1 und DE 101 24 048 A1 sind weitere Vorrichtung zur Befestigung einer Montageschiene an einem Dachhaken bekannt.

Aufgabe der Erfindung ist es, eine Vorrichtung zur höhenverstellbaren Befestigung einer Tragschiene an einem Dachhaken zu schaffen, die verbesserte Montageeigenschaften aufweist und zudem einfach herstellbar ist.

Die Aufgabe wird mit der in Anspruch 1 angegebenen Vorrichtung gelöst. Demgemäß ist die Vorrichtung für einen Dachhaken bestimmt, der wie gewöhnlich eine Grundplatte und einen Haltebügel umfasst, wobei am Haltebügel ein etwa senkrecht zur Ebene der Grundplatte stehender und ein Langloch enthaltender Verstellabschnitt vorgesehen ist. Dieser Verstellabschnitt kann insbesondere quer oder auch parallel zu der Ebene des Haltebügels gerichtet sein. Die Tragschiene, die mittels der Vorrichtung an einem solchen Dachhaken befestigbar ist, weist in bekannter Weise eine Anlageseite und eine hierzu senkrechte Unterseite mit einem Halterand auf. Ein solcher Halterand kann insbesondere der Öffnungsrand einer hinterschnittenen Längsnut in der Unterseite der Tragschiene sein.

Die erfindungsgemäße Vorrichtung umfasst ein Halteelement zur Anordnung an der einen Seite des Verstellabschnitts. Dieses Halteelement weist eine zur Grundplatte etwa parallel vorgesehene Auflagefläche für die Unterseite der Tragschiene sowie einen bezüglich der Auflagefläche abragenden und zum Hintergreifen des Halterands vorgesehenen Greiffortsatz auf. Die Vorrichtung umfasst des Weiteren eine Schraube, die von der anderen Seite des Verstellabschnitts durch das Langloch und in eine Öffnung im Halteelement führt und mit einem Innengewindeträger im Gewindeeingriff steht. Der Innengewindeträger kann hierbei auch das Halteelement selbst sein oder es ist insbesondere eine Mutter als Innengewindeträger vorgesehen, welche bevorzugt am Halteelement verdrehsicher festgelegt ist. - Die Vorrichtung umfasst außerdem mindestens ein Führungsmittel zur verdrehsicheren Längsführung des Halteelements entlang des Verstellabschnitts. Schließlich ist wesentlich, dass der Greiffortsatz bei verspannter Schraube die auf die Auflagefläche aufgelegte Tragschiene niederhält und gegen die eine Seite des Verstellabschnitts klemmt.

Mit der erfindungsgemäßen Vorrichtung kann die Tragschiene am Verstellabschnitt des Dachhakens in unterschiedlichen Abständen zur Ebene der Grundplatte bzw. zu der Unterkonstruktion eines Schrägdaches befestigt sein. Die Last der Tragschiene wird dabei mittels des Halteelements in statisch günstiger Weise an den Dachhaken abgeleitet, wobei es bevorzugt ist, wenn der Verstellabschnitt quer zur Ebene des Haltebügels gerichtet ist. In diesem Fall ist das Halteelement vorzugsweise an der dem Haltebügel mehrheitlich abgewandten bzw. bei montiertem Dachhaken an der dachaufwärts gerichteten Seite des Verstellabschnitts angeordnet und die Montageschiene verläuft etwa horizontal. Der Greiffortsatz des Halteelement bewirkt zum einen durch Hintergreifen des Montagerands, dass die Tragschiene, insbesondere bei starken Windeinflüssen, vom Halteelement nicht abheben kann und zum anderen durch Klemmen gegen den Verstellabschnitt, dass die Tragschiene auch in den anderen Richtungen fest gehalten ist. In montagefreundlicher Weise kann die Schraube außerdem von der anderen, vorzugsweise dachabwärts gerichteten Seite des Verstellabschnitts eingesetzt und angezogen werden. Ein Einsetzen der Schraube in die Tragschiene wie im Stand der Technik ist mit dem Halteelement nicht mehr erforderlich. Ein weiterer wesentlicher Vorteil liegt darin, dass mittels der bevorzugt genau einen Schraube zugleich das Halteelement an dem Verstellabschnitt und die Tragschiene gegen den Verstellabschnitt geklemmt werden kann. Die erfindungsgemäße Vorrichtung ist zudem mit nur wenigen Teilen leicht herstellbar, wobei es bevorzugt ist, wenn das Halteelement im Wesentlichen als Strangpress- oder Gussteil ausgeführt ist.

In einer bevorzugten Ausführungsform ist das mindestens eine Führungsmittel am Halteelement fest vorgesehen, insbesondere einstückig mit diesem gegossen, und es fasst den Verstellabschnitt seitlich. Alternativ ist es möglich, dass die Vorrichtung ein separates Führungselement zur Anordnung an der anderen Seite des Verstellabschnitts umfasst, und das mindestens eine Führungsmittel an dem Führungselement fest vorgesehen ist, wobei das Führungsmittel sowohl den Verstellabschnitt als auch das Halteelement seitlich fasst. In beiden Fällen ist es bevorzugt, wenn genau zwei Führungsmittel, insbesondere in der Art von zueinander parallelen Führungswangen, vorgesehen sind, welche den Verstellabschnitt an seinen Rändern zur verdrehsicheren Längsführung beidseitig fassen. Das separate Führungselement kann hierzu in einfacher Weise etwa U-förmig ausgebildet sein, wobei die Schenkel einer solchen U-Form die Führungsmittel bilden. In beiden Fällen ist es von Vorteil, wenn der Verstellabschnitt einen rechteckigen Querschnitt aufweist.

In einer weiteren bevorzugten Ausführungsform ist die Vorrichtung bereits an dem Dachhaken vormontiert. Dies erspart Montagezeit und erhöht Arbeitssicherheit auf dem Schrägdach. Dabei ist besonders von Vorteil, wenn die Vorrichtung ein Federelement umfasst, welches das Halteelement in einem Vormontagezustand, d. h. bei noch nicht festgezogener Schraube vom Verstellabschnitt wegdrückt. Dadurch kann die Tragschiene auf einfache Weise in die vormontierte Baugruppe ein- bzw. aufgesetzt werden, ohne dass das Halteelement von Hand manipuliert werden müsste. Ein solches Federelement, insbesondere eine Spiralfeder, kann sich zweckmäßigerweise mit einem Ende am Verstellabschnitt und mit dem anderen Ende am Halteelement abstützen. Des Weiteren kann es vorteilhaft sein, wenn das Federelement von der Schraube durchdrungen ist.

In einer besonders bevorzugten Ausführungsform in Kombination mit dem Federelement ist das Halteelement in einer bezüglich des Langlochs mittleren oder unteren Stellung am Versteltabschnitt vorpositioniert. Werden wie üblich mehrere Dachhaken für die Befestigung einer Tragschiene benötigt, gestaltet sich die Montage auf einem Schrägdach mit Hilfe mehrerer identisch vormontierten Baugruppen besonders einfach, schnell und sicher. Das Federelement kann außerdem so ausgelegt sein, dass das Halteelement auch unter dem Eigengewicht einer Tragschiene in einer mittleren Stellung vorpositioniert bleibt.

In einer alternativen Anordnungsweise kann der Verstellabschnitt auch parallel zur Ebene des Haltebügels gerichtet sein. Dies bedeutet, dass eine mit der Vorrichtung an einem solchen Dachhaken befestigte Tragschiene in der Falllinie des Schrägdachs bzw. parallel zu dessen Dachsparren verläuft.

Nachfolgend wird die Erfindung anhand mehrerer Ausführungsbeispiele näher erläutert. Es zeigen:
**Fig. 1** eine Seitenansicht einer Tragschiene sowie einer vormontierten Baugruppe mit einem Dachhaken und einer erfindungsgemäßen Vorrichtung,
**Fig. 2** eine Schnittansicht der vormontierten Baugruppe gemäß **Fig. 1** mit aufgesetzter Tragschiene,
**Fig. 3** eine Seitenansicht der Baugruppe gemäß **Fig. 1**, endmontiert mit festgeklemmter Tragschiene,
**Fig. 4** eine Vorderansicht der Baugruppe gemäß **Fig. 3**,
**Fig. 5** eine perspektivische Ansicht der Baugruppe gemäß **Fig. 3**,
**Fig. 6** eine perspektivische Ansicht eines Halteelements der Vorrichtung gemäß **Fig. 1**,
**Fig. 7** eine Anordnung mit einer Baugruppe vergleichbar zu der gemäß **Fig. 5**,
**Fig. 8** und **Fig. 9** eine Baugruppe mit einem alternativen Verstellabschnitt, und
**Fig. 10** bis **Fig. 12** eine Baugruppe mit einem alternativen Halteelement.

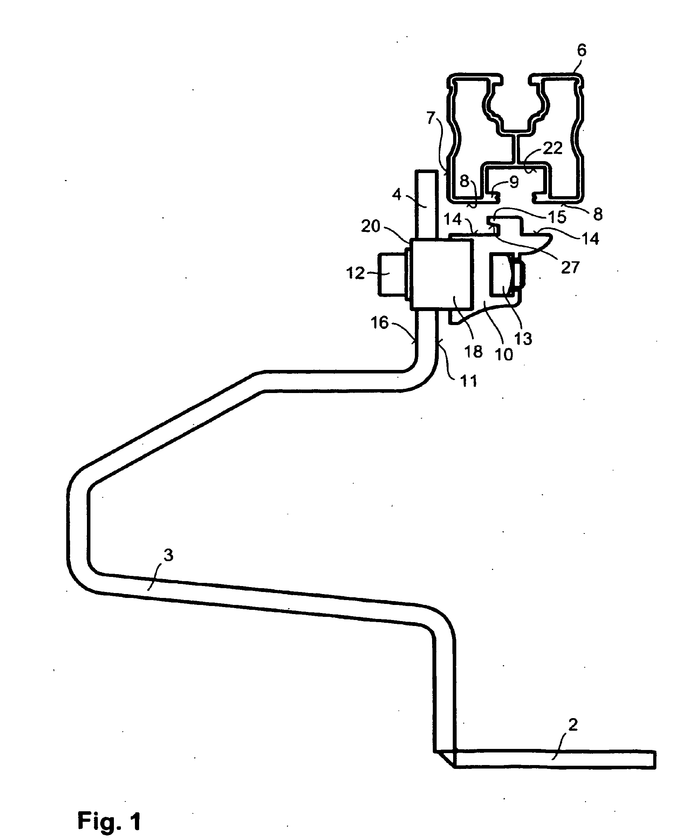

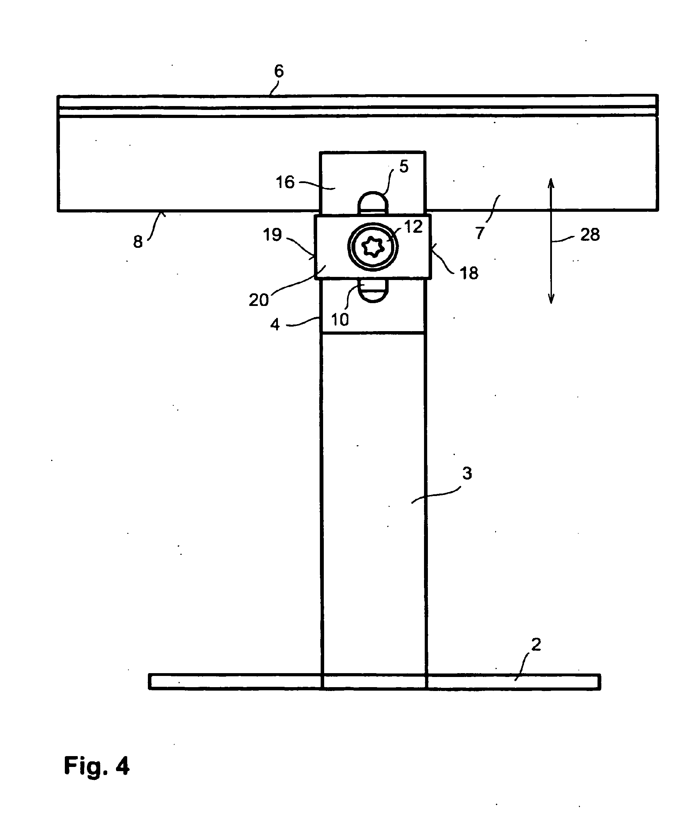

Die vormontierte Baugruppe gemäß **Fig. 1** bis **Fig. 4** umfasst eine erfindungsgemäße Vorrichtung sowie einen Dachhaken. Mittels der Vorrichtung kann eine Tragschiene **6** an dem Dachhaken befestigt werden. Der Dachhaken umfasst wie üblich eine Grundplatte **2**, mit welcher der Dachhaken an der Unterkonstruktion eines Schrägdaches befestigt sein kann, sowie einen Haltebügel **3**, der zur Befestigung von Bauteilen oberhalb der Dacheindeckung dann um deren Deckelement herumführt. Der Haltebügel **3** weist an seinem freien Ende einen etwa senkrecht zur Ebene der Grundplatte stehenden Verstellabschnitt **4** auf, in dem ein ebenso gerichtetes Langloch **5** enthalten ist. Ferner weist der Verstellabschnitt **4** einen rechteckigen Querschnitt auf mit zwei einander gegenüberliegenden, breiten Seiten **11** und **16** sowie zwei Schmalseiten.

Die Tragschiene **6** weist in bekannter Weise eine Anlageseite **7** und eine hierzu senkrechte Unterseite **8** mit einer etwa mittig vorgesehenen, hinterschnittenen Längsnut **22** auf. Der dem Verstellabschnitt **4** nähere Öffnungsrand der hinterschnittenen Längsnut **22** ist als Halterand **9** für die nachfolgend erläuterte Vorrichtung vorgesehen. Die an der Oberseite der Tragschiene **6** zu erkennende ebenfalls hinterschnittene Längsnut kann zur Befestigung von weiteren Bauteilen verwendet werden. Solche Bauteile können insbesondere sogenannte Modulklemmen sein für weitere Befestigung von Photovoltaik-Modulen.

Die erfindungsgemäße Vorrichtung zur Befestigung der Tragschiene **6** an dem Dachhaken umfasst ein Halteelement **10** zur Anordnung an der einen Seite **11** des Verstellabschnitts **4** und ein U-förmiges Führungselement **20** zur Anordnung an der anderen Seite **16** des Verstellabschnitts sowie eine Schraube **12** und eine Vierkantmutter **13** mit einem Innengewinde. Das Halteelement **10** weist eine zur Grundplatte **2** des Dachhakens etwa parallel vorgesehene Auflagefläche **14** für die Unterseite **8** der Tragschiene **6** auf. Außerdem weist das Halteelement **10** einen bezüglich der Auflagefläche **14** abragenden und zum Hintergreifen des Halterands **9** vorgesehenen Greiffortsatz **15** auf.

Die Schraube **12** der Vorrichtung führt von der anderen Seite **16** des Verstellabschnitts **4** durch das Führungselement **20**, das Langloch **5** und durch eine Öffnung **17** im Halteelement **10** und steht mit der Vierkantmutter **13** im Gewindeeingriff, wobei die Vierkantmutter **13** am Halteelement **10** verdrehsicher festgelegt ist. Anstatt der Vierkantmutter **13** ist vorstellbar, dass das Halteelement **10** selbst ein Innengewinde trägt, insbesondere in der Öffnung **17**.

Ferner weist das U-förmige Führungselement **20** zwei Führungswangen **18** und **19** auf, die zur verdrehsicheren Längsführung des Halteelements **10** entlang des Verstellabschnitts **4** sowohl die Schmalseiten des Verstellabschnitts **4** als auch das Halteelement **10** seitlich fassen bzw. umgreifen. Dadurch kann das Führungselement **20** und infolge auch das Halteelement **10** mittels der beiden Führungswangen **18** und **19** entlang der Schmalseiten des Verstellabschnitts **4** verdrehsicher geführt werden. In einer einfacheren Variante hierzu ist es denkbar, das Führungselement **20** mit nur einer Führungswange vorzusehen, beispielsweise L-förmig, so dass es nur an einer der Schmalseiten verdrehsicher geführt ist.

Wie aus **Fig. 1** bis **Fig. 3** erkennbar ist, besteht ein weiteres wesentliches Merkmal der Vorrichtung darin, dass der Greiffortsatz **15** spätestens bei fest verspannter Schraube **12** die auf die Auflagefläche **14** aufgelegte Tragschiene **6** niederhält und gegen die eine Seite **11** des Verstellabschnitts **4** klemmt. Der Greiffortsatz **15** wirkt dazu gegenüber dem Halterand **9** wie ein zur Seite **11** hin offener Haken und weist eine Fügeschräge **27** auf, unter die der Halterand **9** in einfacher Weise formschlüssig einschiebbar ist. Die Fügeschräge **27** und der Halterand **9** sind außerdem derart ausgebildet, dass die Tragschiene **6** auch im Falle einer Schräganordnung klemmend am Greiffortsatz **15** gehalten ist, was bei der Montage auf einem Schrägdach besondere Vorteile bietet. Weiter ist zu erkennen, dass der Greiffortsatz **15** die Auflagefläche **14** in zwei Abschnitte unterteilt, und diese Abschnitte die Unterseite **8** der Tragschiene **6** in statisch günstiger Weise beidseits der hinterschnittenen Längsnut **22** tragen.

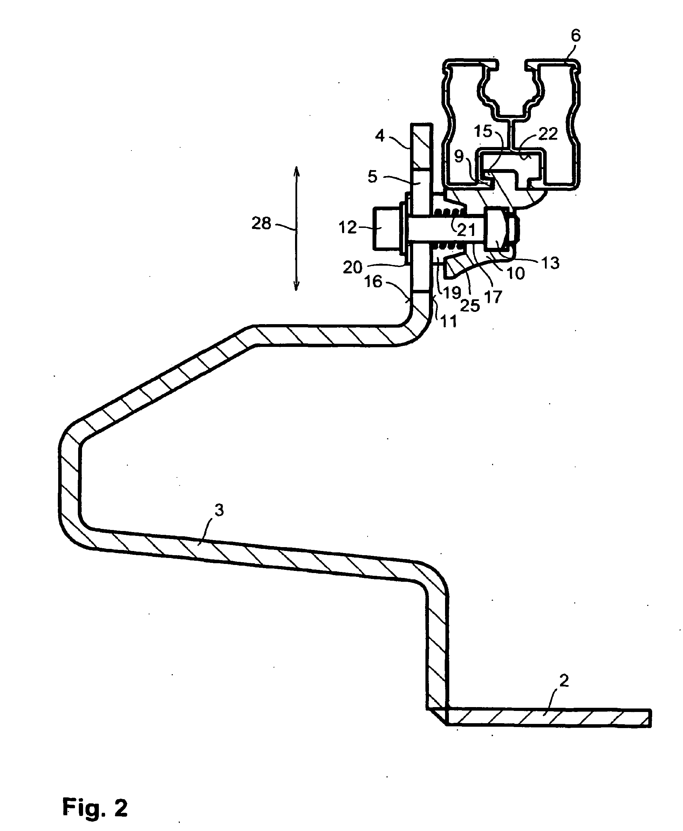

Wie in **Fig. 2** ferner zu erkennen ist, umfasst die Vorrichtung zudem eine Spiralfeder **21**, welche das Halteelement **10** in einem Vormontagezustand gemäß **Fig. 1** und **Fig. 2** bei lediglich vormontierter Schraube **12** vom Verstellabschnitt **4** wegdrückt, so dass zwischen dem Halteelement **10** und der einen Seite **11** ein Freiraum besteht. Die Spiralfeder **21** stützt sich an ihrem einen Ende am Verstellabschnitt **4** und an ihrem anderen Ende am Halteelement **10** ab, wird von der Schraube **12** durchdrungen und ist im Endmontagezustand nahezu vollständig in einer Ausbuchtung **25** im Halteelement **10** aufgenommen. Selbstverständlich sind auch andere Federelemente denkbar, und es ist möglich, ein solches Federelement direkt am Halteelement **10** anzuformen oder mit diesem zu extrudieren.

Die Vorrichtung ist am Verstellabschnitt **4** bezüglich des Langlochs **5** in einer mittleren Position vormontiert, wie aus **Fig. 1** und **Fig. 2** ersichtlich ist. Die Spiralfeder **21** kann hierbei in ihrer Federkraft optional so ausgelegt sein, dass das Halteelement **10** das Eigengewicht der Tragschiene **6** tragen kann, d. h. bei aufgelegter Tragschiene **6** im Vormontagezustand nicht nach unten rutscht, wobei hinsichtlich der Federkraft berücksichtigt sein kann, dass eine Tragschiene üblicherweise auf mehrere Vorrichtungen annähernd gleichzeitig aufgelegt wird. Von dieser Mittelposition ausgehend kann die Vorrichtung und damit die Tragschiene **6** sowohl nach unten als auch oben verschoben und festgestellt werden, d. h. der Abstand zu der Dachebene kann verkleinert oder vergrößert werden, was durch den Doppelpfeil **28** verdeutlicht ist. Auf diese Weise können Unebenheiten der Unterkonstruktion des Schrägdachs oder auch der Dachdeckung ausgeglichen werden. Weiter ist zu erkennen, dass mit dem im Vormontagezustand vom Verstellabschnitt **4** ausreichend weit beabstandeten Halteelement **10** es möglich ist, die Tragschiene **6** ohne weitere Manipulation des Halteelements **10** auf die Auflagefläche **14** aufzusetzen, wobei die hinterschnittene Längsnut **22** über den Greiffortsatz **15** gesetzt wird.

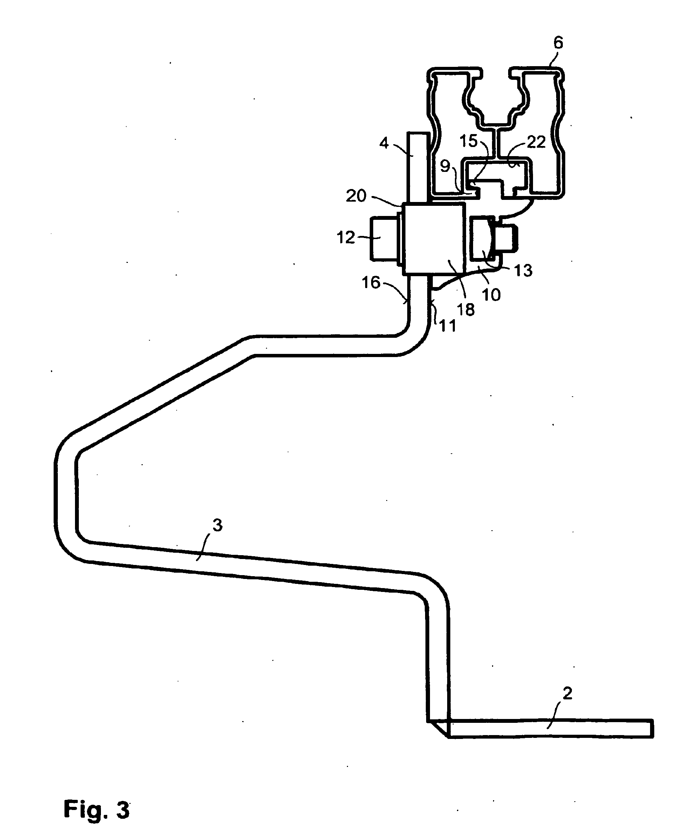

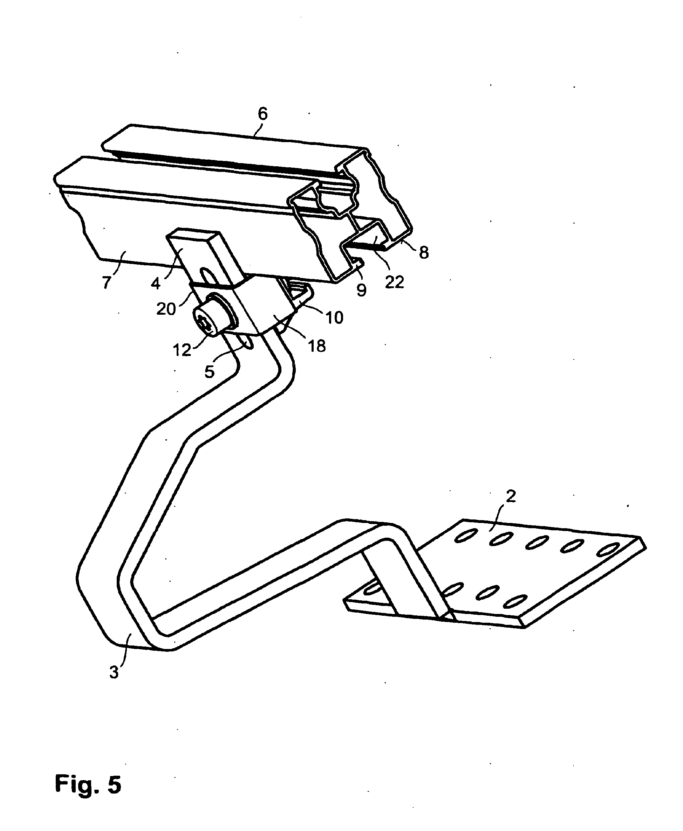

Beim Festziehen den Schraube **12** verringert sich der Abstand zwischen Halteelement **10** und dem Verstellabschnitt **4** gegen die Federkraft der Spiralfeder **21**. Außerdem hintergreift der Hakenfortsatz **15** spätestens dann den Öffnungsrand **9** der hinterschnittenen Längsnut **22** und drückt diese im Endmontagezustand gemäß **Fig. 3** bis **Fig. 5**, also bei fest angezogener Schraube **12** gegen den Verstellabschnitt **4**. Dabei kommt die Anlageseite **7** mit der einen Seite **11** des Verstellabschnitts **4** zur Anlage. Der Abstand des Greiffortsatzes **15** gegenüber der einen Seite **11** ist hierbei in geeigneter Weise so gewählt, dass zwischen dem Halteelemente **10** und der Seite **11** des Verstellabschnitts **4** ein kleiner Spalt bestehen bleibt und die Tragschiene **6** zwischen der Seite **11** und dem Greiffortsatz **15** sowohl form-als auch kraftschlüssig gehalten ist, so dass sich die Tragschiene in keiner Richtung mehr unabsichtlich lösen kann. Die vorpositionierte oder anderweitig gewählte Stellung kann mit Lösen und erneutem Festziehen der Schraube **12** verändert werden.

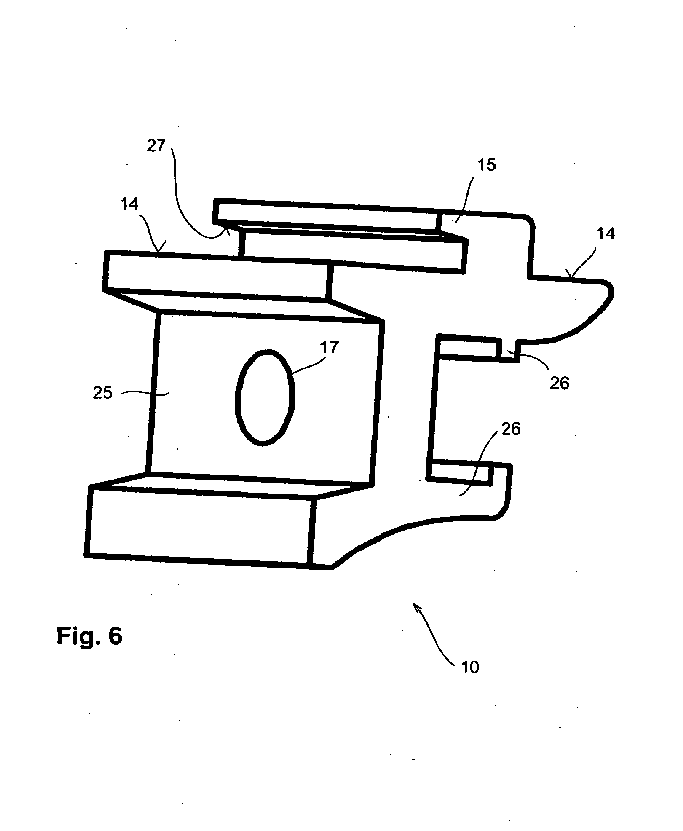

**Fig. 6** zeigt das Halteelement **10** der Vorrichtung gemäß **Fig. 1** bis **Fig. 5** im Detail. Es ist im Wesentlichen als Strangpressteil ausgeführt, welches parallel zur Tragschiene **6** extrudiert ist. Eine zum Verstellabschnitt **4** offene Ausbuchtung **25** wirkt als Aufnahmeraum für die Spiralfeder **21**. Die Öffnung **17** für die Schraube **12** ist durchgehend. Auf der dem Verstellabschnitt **4** gegenüberliegenden Seite des Halteelements **10** sind zwei Fortsätze **26** vorgesehen zur verdrehsicheren und axialen Festlegung der Vierkantmutter **13**.

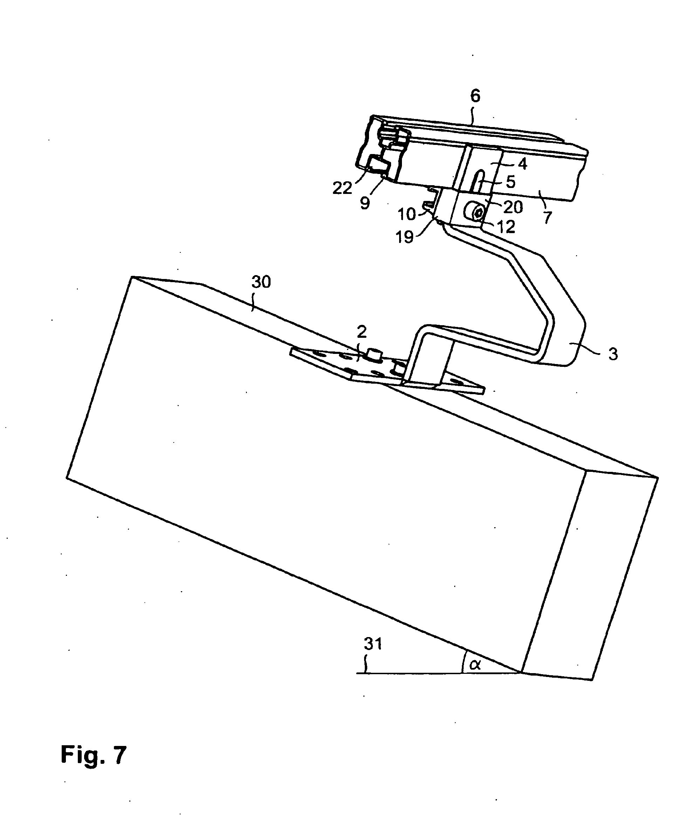

**Fig. 7** zeigt eine typische Anordnung einer Tragschiene **6** an einer endmontierten Baugruppe, die vergleichbar ist mit der zuvor beschriebenen. Der Dachhaken ist mit seiner Grundplatte **2** auf einem Dachsparren **30** eines nicht näher ersichtlichen Schrägdaches befestigt. Der Dachsparren **30** ist gegenüber einer Waagrechten **31** um einen Winkel a geneigt. Außerdem ist zu erkennen, dass die Vorrichtung hier an einer bezüglich des Langlochs **5** unteren Position des Verstellabschnitts **4** festgestellt ist. Die Tragschiene **6** verläuft horizontal und kann in derselben Weise mit weiteren derartigen Dachhaken und erfindungsgemäßen Vorrichtungen auf benachbarten Dachsparren befestigt sein.

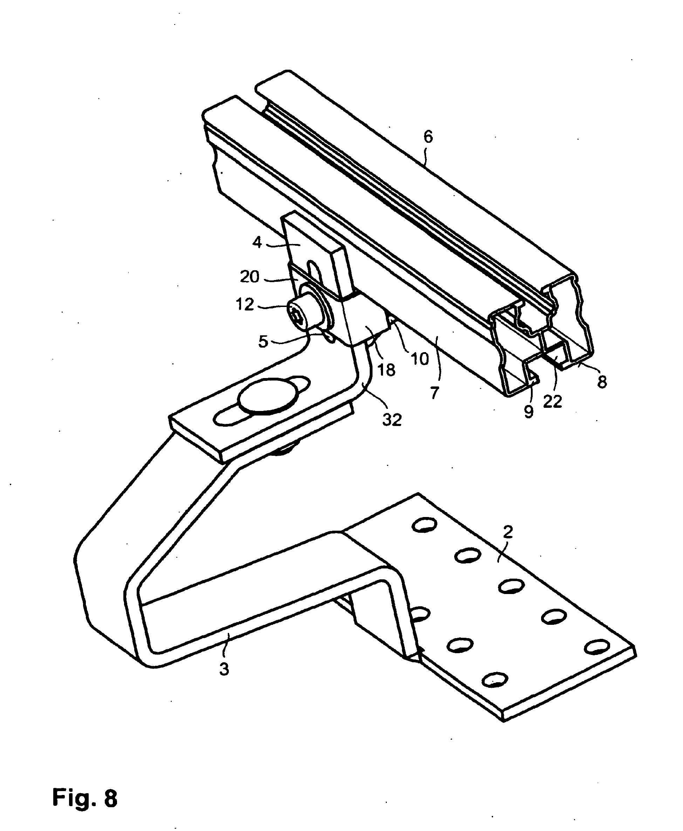

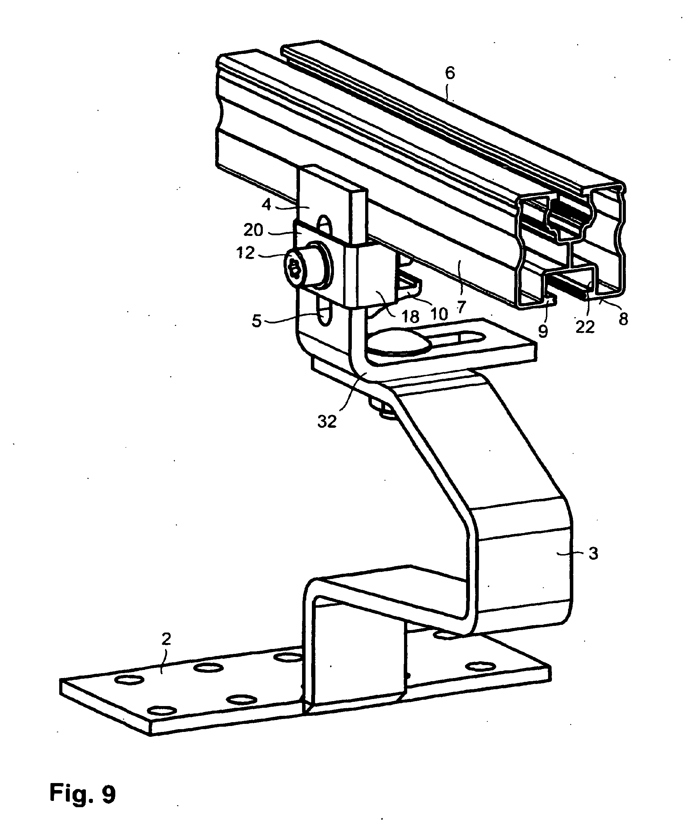

**Fig. 8** und **Fig. 9** zeigen, dass der Verstellabschnitt 4 auch separat ausgeführt sein kann. Der Verstellabschnitt 4 ist in diesen Ausführungsbeispielen der senkrecht stehende Schenkel eines 90°-Winkelstücks **32**. Mit dem anderen Schenkel, der ebenfalls ein Langloch aufweist, ist das 90°-Winkelstück am dachparallel vorgesehenen, freien Ende des Haltebügels **3** mittels einer Schraubverbindung verstellbar befestigt. In **Fig. 8** ist der Verstellabschnitt wie bei den vorherigen Ausführungsbeispielen quer zur Ebene des Haltebügels ausgerichtet, wohingegen in **Fig. 9** das 90°-Winkelstücks **32** so gedreht ist, dass der Verstellabschnitt **4** parallel zur Ebene des Haltebügels gerichtet ist. Die Tragschiene **6** verläuft in letzterem Fall bei an einem Schrägdach montiertem Dachhaken entlang der Falllinie bzw. ist parallel zu den Dachsparren. Alternativ ist es auch möglich, dass ein Verstellabschnitt **4** auf einem dachparallelen Haltebügel in den vorbeschriebenen Ausrichtungen angeschweißt ist.

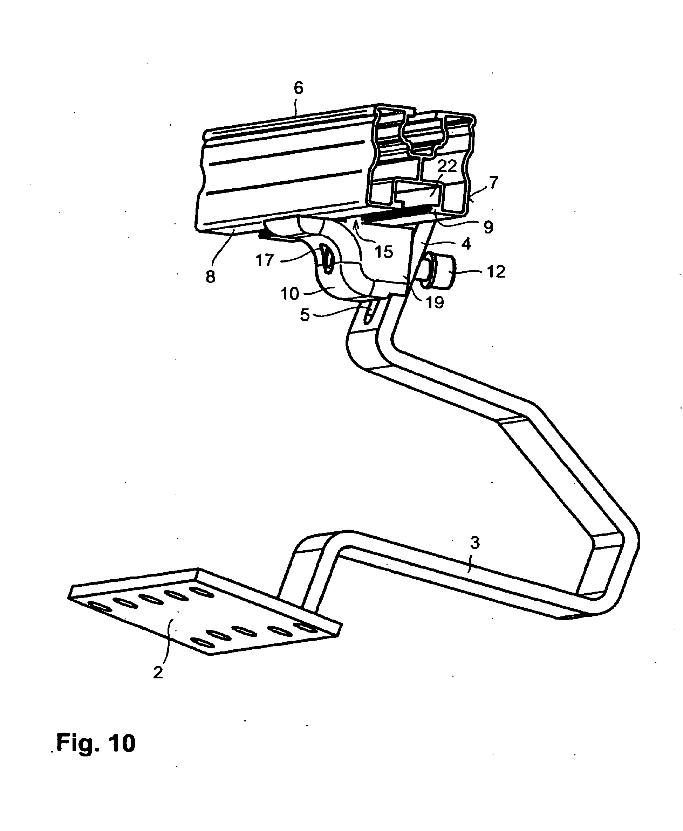

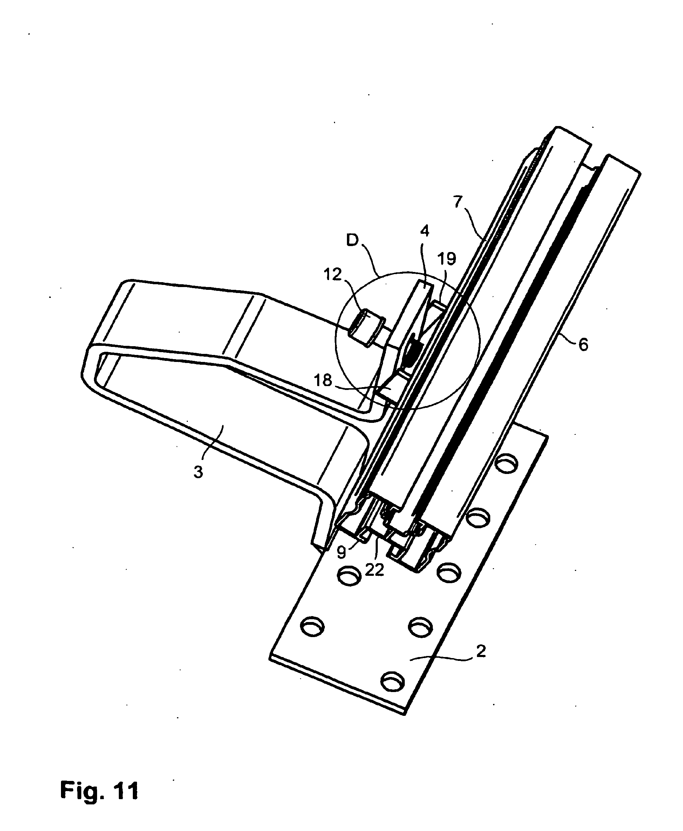

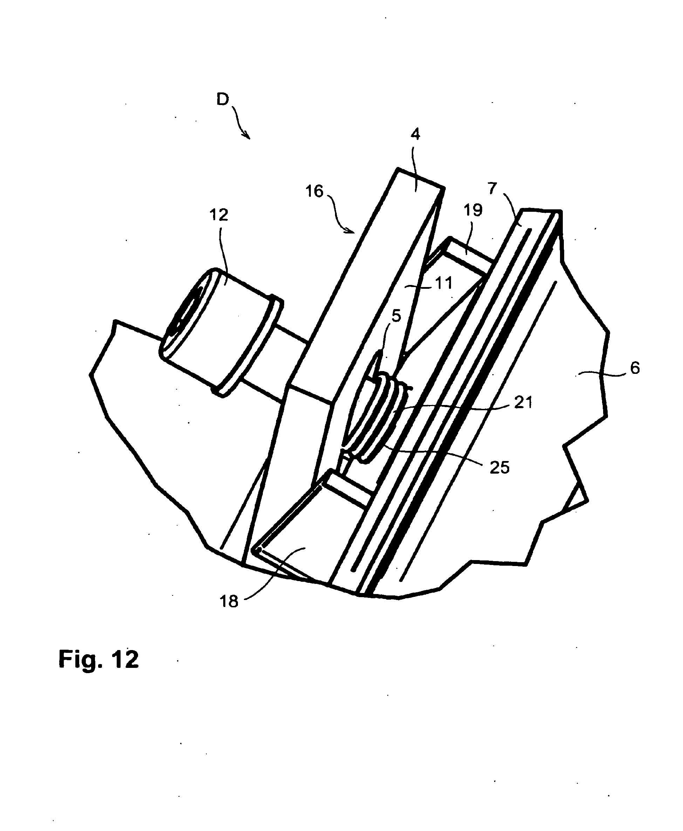

Schließlich ist in **Fig. 10** bis **Fig. 12** eine weitere vormontierte Baugruppe gezeigt, in die eine Tragschiene **6** ein- bzw. aufgesetzt ist. Die vormontierte Baugruppe ist vergleichbar mit dem in den **Fig. 1** bis **Fig. 5** dargestellten Ausführungsbeispiel. Der Unterschied besteht im Wesentlich darin, dass das Halteelement **10** als Gussteil ausgeführt ist und die Führungswangen **18** und **19** am Halteelement **10** fest angeformt bzw. mit diesem mitgegossen sind. Ein separates Führungselement **20** wie in den zuvor beschriebenen Ausführungsbeispielen ist nicht erforderlich. Außerdem wirkt das Halteelement **10** selbst als Innengewindeträger, so dass keine separate Mutter erforderlich ist. Das Innengewinde ist in der Öffnung **17** für die Schraube **12** vorgesehen. Der hier nicht näher ersichtliche Greiffortsatz **15** ist identisch zu den vorherigen Ausführungsformen ausgeführt. Als Federelement ist wieder eine von der Schraube **12** durchdrungene Spiralfeder **21** vorgesehen, die in einer runden Aufnahmeöffnung **25** eingesetzt ist, welche im weiteren in die Öffnung **17** für die Schraube **12** übergeht. Wie im Detail D in **Fig. 12** erkennbar ist, stützt sich die Spiralfeder **21** mit ihrem einen Ende an der Seite **11** am Rand des Langlochs **5** und mit ihrem anderen Ende an einer nicht näher ersichtlichen Schulter am Übergang der Aufnahmeöffnung **25** zur Öffnung **17** im Halteelement **10** ab.

## Patentansprüche

1. Vorrichtung zur Befestigung einer Montageschiene (**6**) an einem Dachhaken, wobei der Dachhaken eine Grundplatte (**2**) zur Befestigungen auf einer Dachunterkonstruktion (**30**) und einen Haltebügel (**3**) umfasst, und am Haltebügel (**3**) ein Langloch (**5**) enthaltender Verstellabschnltt (**4**) mit einer ersten Seite (**11**) und einer dieser gegenüberliegenden zweiten Seite (**16**) vorgesehen ist, und die Montageschiene (**6**) eine Anlageseite (**7**) und eine hierzu senkrechte Unterseite (**8**) mit einem Halterand (**9**) aufweist, und die Vorrichtung ein Halteelement (**10**) zur Anordnung an der ersten Seite (**11**) des Verstellabschnitts (**4**) sowie eine Schraube (**12**) umfasst, und das Halteelement (**10**) eine zur Grundplatte (**2**) etwa parallel vorgesehene Auflagefläche (**14**) für die Unterseite (**8**) der Montageschiene (**6**) sowie einen bezüglich der Auflagefläche (**14**) abragenden und zum Hintergreifen des Halterands (**9**) vorgesehenen Greiffortsatz (**15**) aufweist, und die Schraube (**12**) durch das Langloch (**5**) und in eine Öffnung (**17**) im Halteelement (**10**) führt und mit einem Innengewindeträger (**13**) im Gewindeeingriff steht, und die Vorrichtung mindestens ein Führungsmittel (**18**, **19**) umfasst zur verdrehsicheren Längsführung des Halteelements (**10**) entlang des Verstellabschnitts (**4**), und der Greiffortsatz (**15**) bei verspannter Schraube (**12**) die auf die Auflagefläche (**14**) aufgelegte Montageschiene (**6**) niederhält, **dadurch gekennzeichnet, dass** für eine höhenverstellbare Befestigung der Montageschiene (**6**) der Verstellabschnitt (**4**) etwa senkrecht zu der Ebene der Grundplatte (**2**) steht, und die Schraube (**12**) von der zweiten Seite (**16**) aus durch das Langloch **(5)** und in die Öffnung (**17**) im Halteelement (**10**) eingesetzt ist und von der zweiten Seite (**16**) aus angezogen werden kann, und der Greiffortsatz (**15**) bei verspannter Schraube (**12**) die auf die Auflagefläche (**14**) aufgelegte Montageschiene (**6**) direkt gegen die erste Seite (**11**) des Verstellabschnitts (**4**) klemmt, wobei die Anlageseite (**7**) der Montageschiene (**11**) mit der ersten Seite (**11**) des Verstellabschnitts (**4**) zur Anlage kommt.

2. Vorrichtung nach Anspruch 1, **dadurch gekennzeichnet, dass** das mindestens eine Führungsmittel (**18**, **19**) am Halteelement (**10**) fest vorgesehen ist und den Verstellabschnitt (**4**) seitlich fasst.

3. Vorrichtung nach Anspruch 1, **dadurch gekennzeichnet, dass** die Vorrichtung ein Führungselement (**20**) umfasst zur Anordnung an der zweiten Seite (**16**) des Verstellabschnitts (**4**), und das mindestens eine Führungsmittel (**18**, **19**) an dem Führungselement (**20**) fest vorgesehen ist, wobei das Führungsmittel (**18**, **19**) sowohl den Verstellabschnitt (**4**) als auch das Halteelement (**10**) seitlich fasst.

4. Vorrichtung nach dem vorhergehenden Anspruch, **dadurch gekennzeichnet, dass** das Führungselement (**20**) im Wesentlichen eine U-Form aufweist.

5. Vorrichtung nach einem der vorhergehenden Ansprüche, **dadurch gekennzeichnet, dass** genau zwei Führungsmittel (**18**, **19**) vorgesehen sind, die den Verstellabschnitt (**4**) seitlich fassen.

6. Vorrichtung nach Anspruch 1 oder 2, **dadurch gekennzeichnet, dass** das Halteelement (**10**) im Wesentlichen ein Gussteil ist.

7. Vorrichtung nach Anspruch 1 oder 3, **dadurch gekennzeichnet, dass** das Halteelement (**10**) im Wesentlichen ein Strangpressteil ist.

8. Vorrichtung nach einem der vorhergehenden Ansprüche, **dadurch gekennzeichnet, dass** das Halteelement (**10**) der Innengewindeträger (**13**) ist, oder eine Mutter der Innengewindeträger (**13**) ist, welche am Halteelement (**10**) verdrehsicher festgelegt ist.

9. Vorrichtung nach Anspruch 1, **dadurch gekennzeichnet, dass** der Verstellabschnitt (**4**) parallel oder quer zur Ebene des Haltebügels (**3**) des Dachhakens gerichtet ist.

10. Vorrichtung nach Anspruch 1, **dadurch gekennzeichnet, dass** der Halterand (**9**) der Rand einer hinterschnittenen Längsnut (**22**) in der Unterseite (**8**) der Montageschiene (**6**) ist.

11. Vormontierte Baugruppe umfassend die Vorrichtung nach einem der Ansprüche 1 bis 8, angeordnet an einem Dachhaken nach Anspruch 1 oder 9.

12. Vormontierte Baugruppe nach dem vorhergehenden Anspruch, **dadurch gekennzeichnet, dass** die Vorrichtung ein Federelement (**21**) umfasst, welches das Halteelement (**10**) in einem Vormontagezustand vom Verstellabschnitt (**4**) wegdrückt

13. Vormontierte Baugruppe nach dem vorhergehenden Anspruch, **dadurch gekennzeichnet, dass** das Federelement (**21**) an dem Halteelement (**10**) angeformt ist.

14. Vormontierte Baugruppe nach einem der vorhergehenden Ansprüche, **dadurch gekennzeichnet, dass** das Federelement (**21**) von der Schraube (**12**) durchdrungen ist.

15. Vormontierte Baugruppe nach einem der vorhergehenden Ansprüche, **dadurch gekennzeichnet, dass** die erste Seite (**11**) die dem Haltebügel (**3**) mehrheitlich abgewandte Seite ist.

16. Vormontierte Baugruppe nach einem der vorhergehenden Ansprüche, **dadurch gekennzeichnet, dass** das Halteelement (**10**) in einer bezüglich des Langlochs (**5**) mittleren oder unteren Stellung am Verstellabschnitt (**4**) vorpositioniert ist.

17. Anordnung der vormontierten Baugruppe nach einem der Ansprüche 11 bis 16, **dadurch gekennzeichnet, dass** der Dachhaken mit seiner Grundplatte (**2**) an der Unterkonstruktion eines Schrägdaches befestigt ist.

18. Anordnung nach dem vorhergehenden Anspruch, **dadurch gekennzeichnet, dass** die Montageschiene (**6**) mittels der Vorrichtung an dem Dachhaken befestigt ist.

19. Anordnung nach dem vorhergehenden Anspruch, **dadurch gekennzeichnet, dass** die Montageschiene (**6**) etwa horizontal verlaufend oder parallel zur Falllinie des Schrägdaches ist.

## Claims

1. Apparatus for fastening a mounting rail (**6**) to a roof hook, wherein the roof hook comprises a baseplate (**2**) for fastening on a roof substructure (**30**) and a holding bracket (**3**), and an adjustment section (**4**) is provided on the holding bracket (**3**), the adjustment section (**4**) contains an oblong hole (**5**) and comprises a first side (**11**) and opposite thereto a second side (**16**), and the mounting rail (**6**) has a contact side (**7**) and perpendicular thereto an underside (**8**) with a holding edge (**9**), and the apparatus comprises a retaining element (**10**) for arranging on the first side (**11**) of the adjustment section (**4**) and a screw (**12**), and the retaining element (**10**) has a bearing surface (**14**), provided approximately parallel to the baseplate (**2**), for the underside (**8**) of the mounting rail (**6**) and also a gripping extension (**15**) projecting with respect to the bearing surface (**14**) and provided for engaging behind the holding edge (**9**), and the screw (**12**) leads through the oblong hole (**5**) and into an opening (**17**) in the retaining element (**10**) and is in threaded engagement with an internal thread carrier (**13**), and the apparatus comprises at least one guide means (**18**, **19**) for rotationally secure longitudinal guidance of the retaining element (**10**) along the adjustment section (**4**), and, with the screw (**12**) tightened, the gripping extension (**15**) holds down the mounting rail (**6**) placed on the bearing surface (**14**), **characterized in that**, for a height-adjustable fastening of the mounting rail (**6**), the adjustment section (**4**) is approximately perpendicular to the plane of the baseplate (**2**), and the screw (**12**) is inserted from the second side (**16**) through the oblong hole (**5**) and into the opening (**17**) in the retaining element (**10**) and can be tightened from the second side (**16**), and, with the screw (**12**) tightened, the gripping extension (**15**) clamps the mounting rail (**6**) placed on the bearing surface (**14**) directly against the first side (**11**) of the adjustment section (**4**), wherein the contact side (**7**) of the mounting rail (**6**) comes to abut on the first side (**11**) of the adjustment section (**4**).

2. Apparatus according to Claim 1, **characterized in that** the at least one guide means (**18**, **19**) is fixedly disposed on the retaining element (**10**) and laterally borders the adjustment section (**4**).

3. Apparatus according to Claim 1, **characterized in that** the apparatus comprises a guide element (**20**) for arranging on the second side (**16**) of the adjustment section (**4**), and the at least one guide means (**18**, **19**) is fixedly provided on the guide element (**20**), wherein the guide means (**18**, **19**) laterally borders both the adjustment section (**4**) and the retaining element (**10**).

4. Apparatus according to the preceding claim, **characterized in that** the guide element (**20**) has substantially a U shape.

5. Apparatus according to one of the preceding claims, **characterized in that** exactly two guide means (**18**, **19**) are provided which laterally borders the adjustment section (**4**).

6. Apparatus according to Claim 1 or 2, **characterized in that** the retaining element (**10**) is substantially a cast part.

7. Apparatus according to Claim 1 or 3, **characterized in that** the retaining element (**10**) is substantially an extruded part.

8. Apparatus according to one of the preceding claims, **characterized in that** the retaining element (**10**) is the internal thread carrier (**13**), or a nut is the internal thread carrier (**13**), which is fixed against rotation on the retaining element (**10**).

9. Apparatus according to Claim 1, **characterized in that** the adjustment section (**4**) is directed parallel or transversely to the plane of the holding bracket (**3**) of the roof hook.

10. Apparatus according to Claim 1, **characterized in that** the holding edge (**9**) is the edge of an undercut longitudinal groove (**22**) in the underside (**8**) of the mounting rail (**6**).

11. Preassembled assembly comprising the apparatus according to one of Claims 1 to 8, arranged on a roof hook according to Claim 1 or 9.

12. Preassembled assembly according to the preceding claim, **characterized in that** the apparatus comprises a spring element (**21**) which presses away the retaining element (**10**) from the adjustment section (**4**) in a preassembled state.

13. Preassembled assembly according to the preceding claim, **characterized in that** the spring element (**21**) is integrally formed on the retaining element (**10**).

14. Preassembled assembly according to one of the preceding claims, **characterized in that** the spring element (**21**) is penetrated by the screw (**12**).

15. Preassembled assembly according to one of the preceding claims, **characterized in that** the first side (**11**) is the side predominantly facing away from the holding bracket (**3**).

16. Preassembled assembly according to one of the preceding claims, **characterized in that** the retaining element (**10**) is prepositioned on the adjustment section (**4**) in a middle or lower position with respect to the oblong hole (**5**).

17. Arrangement of the preassembled assembly according to one of Claims 11 to 16, **characterized in that** the roof hook is fastened by its baseplate (**2**) to the substructure of a pitched roof.

18. Arrangement according to the preceding claim, **characterized in that** the mounting rail (**6**) is fastened to the roof hook by means of the apparatus.

19. Arrangement according to the preceding claim, **characterized in that** the mounting rail (**6**) is approximately horizontally extending or parallel to the line of slope of the pitched roof.

## Revendications

1. Dispositif pour la fixation d'un rail (**6**) de montage sur un crochet de toit, le crochet de toit comprenant une plaque (**2**) de base pour des fixations à une sous-construction (**30**) de toit et un étrier (**3**) de retenue, et une portion (**4**) de réglage contenant un trou (**5**) oblong étant prévue sur l'étrier (**3**) de retenue et présentant un premier côté (**11**) et un deuxième côté (**16**) opposé au premier côté (**11**), et le rail (**6**) de montage présentant un côté (**7**) de contact et un côté (**8**) inférieur perpendiculaire au côté (**7**) de contact comprenant un bord (**9**) de retenue, et le dispositif comprenant un élément (**10**) de retenue destiné à être positionné au premier côté (**11**) de la portion (**4**) de réglage ainsi qu'une vis (**12**), et l'élément (**10**) de retenue présentant une surface (**14**) d'appui prévue approximativement parallèlement à la plaque (**2**) de base pour le côté (**8**) inférieur du rail (**6**) de montage ainsi qu'une saillie (**15**) de préhension faisant saillie par rapport à la surface (**14**) d'appui et prévue pour venir en prise par l'arrière avec le bord (**9**) de retenue, et la vis (**12**) conduisant à travers le trou (**5**) oblong et dans une ouverture (**17**) dedans l'élément (**10**) de retenue et étant en prise d'engagement fileté avec un support (**13**) fileté intérieur, et le dispositif comprenant au moins un moyen (**18**, **19**) de guidage pour le guidage longitudinal fixé en rotation de l'élément (**10**) de retenue le long de la portion (**4**) de réglage, et la saillie (**15**) de préhension, lorsque la vis (**12**) est serrée, maintenant vers le bas le rail (**6**) de montage posé sur la surface (**14**) d'appui, **caractérisé en ce que** pour une fixation réglable en hauteur du rail (**6**) de montage, la portion (**4**) de réglage est approximativement perpendiculaire au plan de la plaque (**2**) de base, et la vis (**12**) est insérée à partir du deuxième côté (**16**) à travers le trou (**5**) oblong et dedans l'ouverture (**17**) dans l'élément (**10**) de retenue et peut être vissée par le deuxième côté (**16**), et la saillie (**15**) de préhension, lorsque la vis (**12**) est serrée, serre le rail (**6**) de montage posé sur la surface (**14**) d'appui directement contre le premier côté (**11**) de la portion (**4**) de réglage, le côté (**7**) de contact du rail (6) de montage ralliant en contact avec le premier côté (**11**) de la portion (**4**) de réglage.

2. Dispositif selon la revendication 1, **caractérisé en ce que** l'au moins un moyen (**18**, **19**) de guidage est prévu fixement sur l'élément (**10**) de retenue et saisit latéralement la portion (**4**) de réglage.

3. Dispositif selon la revendication 1, **caractérisé en ce que** le dispositif comprend un élément (**20**) de guidage pour la disposition sur le deuxième côté (**16**) de la portion (**4**) de réglage, et l'au moins un élément (**18**, **19**) de guidage est prévu fixement sur l'élément (**20**) de guidage, le moyen (**18**, **19**) de guidage saisissant latéralement à la fois la portion (**4**) de réglage et l'élément (**10**) de retenue.

4. Dispositif selon la revendication précédente, **caractérisé en ce que** l'élément (**20**) de guidage présente essentiellement une forme en U.

5. Dispositif selon l'une quelconque des revendications précédentes, **caractérisé en ce qu'**exactement deux moyens (**18**, **19**) de guidage sont prévus, lesquels saisissent latéralement la portion (**4**) de réglage.

6. Dispositif selon la revendication 1 ou 2, **caractérisé en ce que** l'élément (**10**) de retenue est essentiellement une pièce moulée.

7. Dispositif selon la revendication 1 ou 3, **caractérisé en ce que** l'élément (**10**) de retenue est essentiellement une pièce profilée filée.

8. Dispositif selon l'une quelconque des revendications précédentes, **caractérisé en ce que** l'élément (**10**) de retenue est le support (**13**) fileté intérieur ou un écrou du support (**13**) fileté intérieur qui est fixé de manière fixée en rotation sur l'élément (**10**) de retenue.

9. Dispositif selon la revendication 1, **caractérisé en ce que** la portion (**4**) de réglage est orientée parallèlement ou transversalement au plan de l'étrier (**3**) de retenue du crochet de toit.

10. Dispositif selon la revendication 1, **caractérisé en ce que** le bord (**9**) de retenue est le bord d'une rainure (**22**) longitudinale en contre-dépouille dans le côté (**8**) inférieur du rail (**6**) de montage.

11. Module prémonté comprenant le dispositif selon l'une quelconque des revendications 1 à 8, disposé sur un crochet de toit selon la revendication 1 ou 9.

12. Module prémonté selon la revendication précédente, **caractérisé en ce que** le dispositif comprend un élément (**21**) de ressort, qui dans un état de prémontage repousse l'élément (**10**) de retenue de la portion (**4**) de réglage.

13. Module prémonté selon la revendication précédente, **caractérisé en ce que** l'élément (**21**) de ressort est modelé sur l'élément (**10**) de retenue dans une manière adaptée.

14. Module prémonté selon l'une quelconque des revendications précédentes, **caractérisé en ce que** l'élément (**21**) de ressort est traversé par la vis (**12**).

15. Module prémonté selon l'une quelconque des revendications précédentes, **caractérisé en ce que** le premier côté (**11**) est le côté majoritairement détourné à l'étrier (**3**) de retenue.

16. Module prémonté selon l'une quelconque des revendications précédentes, **caractérisé en ce que** l'élément (**10**) de retenue est pré-positionné dans une position centrale ou inférieure par rapport au trou (**5**) oblong sur la portion (**4**) de réglage.

17. Agencement du module prémonté selon l'une quelconque des revendications 11 à 16, **caractérisé en ce que** le crochet de toit est fixé avec sa plaque (**2**) de base sur la sous-construction d'un toit oblique.

18. Agencement selon la revendication précédente, **caractérisé en ce que** le rail (**6**) de montage est fixé au moyen du dispositif sur le crochet de toit.

19. Agencement selon la revendication précédente, **caractérisé en ce que** le rail (**6**) de montage s'étend approximativement horizontalement ou parallèlement à la ligne de pente du toit oblique.
